# EUROPÄISCHE PATENTSCHRIFT

(11) **EP 0 950 009 B1**
(45) Veröffentlichungstag und Bekanntmachung des Hinweises auf die Patenterteilung: **11.04.2001**
(21) Anmeldenummer: 97948675.0
(22) Anmeldetag: 30.12.1997
(51) Int. Cl.: B65C 11/00, G11B 23/40, G09F 3/10

(54) **VORRICHTUNG UND VERFAHREN ZUM AUFBRINGEN EINER SELBSTKLEBENDEN ETIKETTE AUF EINEN SCHEIBENFÖRMIGEN ARTIKEL**
APPARATUS FOR AND METHOD OF APPLYING A SELF-ADHESIVE LABEL ONTO A DISK-SHAPED OBJECT
DISPOSITIF ET PROCEDE POUR APPLIQUER UNE ETIQUETTE AUTOADHESIVE SUR UN ARTICLE EN FORME DE DISQUE

(30) Priorität: 31.12.1996 CH 320596
(43) Veröffentlichungstag der Anmeldung: 20.10.1999
(60) Teilanmeldung: 00116995.2
(73) Patentinhaber: Dynosys AG, 9422 Staad (CH)
(72) Erfinder: SCHWALLER, Edwin, CH-5024 Küttigen (CH); SCHWALLER, André, CH-5012 Schönenwerd (CH)
(74) Vertreter: Patentanwälte Schaad, Balass, Menzl & Partner AG
(86) Internationale Anmeldenummer: CH9700485
(87) Internationale Veröffentlichungsnummer: WO9829313

(56) Entgegenhaltungen:
- EP-A- 0 418 608
- WO-A-96/05057
- DE-U- 29 610 120
- DE-U- 29 617 424
- FR-A- 2 634 931
- GB-A- 2 179 910
- US-A- 4 385 460

## Beschreibung

Die Erfindung betrifft eine Vorrichtung zum Aufbringen einer selbstklebenden Etikette auf einen scheibenförmigen Artikel, insbesondere auf eine Compact Disk, gemäss dem Oberbegriff von Anspruch 1. Die Erfindung betrifft weiter ein Verfahren zum Betrieb der erfindungsgemässen Vorrichtung.

Aus der WO 96/05057 ist eine Vorrichtung zum möglichst zentrischen Aufkleben einer selbstklebenden Etikette auf eine Compact Disk bekannt. Ein zentriertes Aufkleben einer Etikette, auch Label genannt, auf eine Compact Disk, auch CD genannt, ist aus technischen Gründen äusserst wichtig. Eine CD dreht während des Leseprozesses mit einer sehr hohen Geschwindigkeit. Weist die CD eine Unwucht auf, so übertragen sich die dadurch verursachten, exzentrisch wirkenden Kräfte auf das Lesegerät, insbesondere auf die mechanischen Teile und den Lesekopf, was eine vorzeitige Abnutzung oder gar eine Beschädigung des Lesegerätes zur Folge hat. Daher ist die Etikette in einer möglichst exakt zentrischen Lage auf die Compact Disk aufzubringen. Die bekannte Vorrichtung weist den Nachteil auf, dass sie aus mehreren einzelnen Komponenten besteht, die jeweils manuell in einer bestimmten Reihenfolge zusammenzustellen und zu führen sind, was einerseits ein exaktes Zentrieren der Etikette bezüglich der CD erschwert, und andererseits Probleme beim Halten der Komponenten ergibt, weil die klebrige Oberfläche der positionierten Etikette das Lösen der Finger ohne Verrutschen der Etikette weitgehend verunmöglicht. Ein weiterer Nachteil ist darin zu sehen, dass sich die Etikette nach dem Ablösen der Trägerfolie und während der Positionierung durchwölbt, mittig aufbiegt und somit nicht vollständig flach liegend angeordnet ist. Zudem ist nicht auszuschliessen, dass die manuell geführte CD bezüglich der Etikette in einer leicht verkanteten Lage aufgelegt wird, so dass sich zum Beispiel zwischen der CD und der Etikette eingeschlossene Luftblasen bilden, oder die Etikette exzentrisch bezüglich der CD aufgeklebt wird. Zudem besteht ein Spiel:
- zwischen dem Positionierloch und dem Zentrierloch der Etikette;
- zwischen dem Positionierloch und der zylinderförmigen Führung; und
- zwischen dem Zentrierloch der Compact Disk und dem Durchmesser der zylinderförmigen Verlängerung.

Es ist Aufgabe der vorliegenden Erfindung eine Vorrichtung zum Aufbringen einer selbstklebenden Etikette auf einen scheibenförmigen Artikel, insbesondere eine Compact Disk, vorzuschlagen, die ein einfaches, zentriertes und zuverlässig reproduzierbares Aufbringen der Etikette ermöglicht.

Diese Aufgabe wird gelöst mit einer Vorrichtung aufweisend die Merkmale gemäss Anspruch 1. Die Unteransprüche 2 bis 9 beziehen sich auf weitere, vorteilhafte Ausgestaltungen der erfindungsgemässen Vorrichtung.

Die Aufgabe wird weiter gelöst mit einem Verfahren zum Aufbringen von selbstklebenden Etiketten aufweisend die Merkmale von Anspruch 10.

Die erfindungsgemässe Vorrichtung zum insbesondere exakt zentrischen Aufbringen einer selbstklebenden Etikette auf einen scheibenförmigen Artikel, insbesondere auf eine Compact Disk, umfasst ein erstes Gehäuseteil mit einer Haltevorrichtung für die Etikette sowie ein zweites Gehäuseteil mit einer Haltevorrichtung für den scheibenförmigen Artikel, wobei die Gehäuseteile beweglich, insbesondere schwenkbar oder translatorisch beweglich miteinander verbunden und von einer Offenstellung in eine Schliessstellung überführbar sind, derart, dass in Schliessstellung die Haltevorrichtungen in einer gegenüberliegend angeordneten Lage positioniert sind, und dass in Schliessstellung zumindest eine der Haltevorrichtungen in Richtung zur gegenüberliegenden Haltevorrichtung beweglich im Gehäuseteil angeordnet ist, um den scheibenförmigen Artikel mit der Etikette in Berührung zu bringen.

Ein Vorteil der erfindungsgemässen Vorrichtung ist darin zu sehen, dass in Offenstellung die Compact Disk bequem in einer durch das zweite Gehäuseteil bestimmten Lage einlegbar ist und dass die selbstklebende Etikette zusammen mit deren Trägerfolie und/oder Greiflappen bequem in einer durch das erste Gehäuseteil bestimmten Lage einlegbar und positionierbar ist. Nach dem Einlegen in das erste Gehäuseteil wird die Trägerfolie von der Etikette abgezogen, wobei die Etikette vom ersten Gehäuseteil sicher gehalten ist, so dass kaum eine Gefahr besteht, dass die Bedienungsperson mit ihren Fingern mit der freiliegenden, klebrigen Oberfläche der Etikette in Berührung kommt. Die beiden Gehäuseteile sind zum Beispiel um eine gemeinsame Achse schwenkbar miteinander verbunden, so dass die Gehäuseteile auf einfache Weise in eine Schliessstellung zusammenklappbar sind, worauf die Compact Disk und die Etikette gegenüberliegend angeordnet und ausgerichtet sind. In dieser Lage wird insbesondere auf das Zentrum des zweiten Gehäuseteils beziehungsweise auf einen dort angeordneten Betätigungsknopf eine zum ersten Gehäuseteil hin ausgerichtete, leichte Kraft ausgeübt, so dass sich die beiden Gehäuseteile beziehungsweise die beiden Haltevorrichtungen annähern und dabei die Compact Disk auf die Etikette zu liegen kommt, und somit die Etikette aufgeklebt wird.

In einer weiteren vorteilhaften Ausgestaltung der erfindungsgemässen Vorrichtung sind die Etikette und die Compact Disk in der Schliessstellung exakt gegenseitig zentriert angeordnet. Während der Schliessbewegung in die Schliessstellung erfolgt die gegenseitige Zentrierung selbsttätig, so dass die Etikette und die Compact Disk in der Schliessstellung zentriert übereinanderliegend angeordnet sind und nur noch über eine kleine Pressbewegung zur gegenseitigen Berührung gebracht werden müssen. Somit können selbstklebende Etiketten exakt zentrisch auf Compact Disks oder andere scheibenförmige Artikel aufgeklebt werden.

Das gegenseitige Zentrieren der beiden Gehäuseteile beziehungsweise der beiden Haltevorrichtungen weist den weiteren Vorteil auf, dass die erfindungsgemässe Vorrichtung selbst dann, wenn die Bauteile, zum Beispiel auf Grund von Fertigungstoleranzen, leicht unterschiedlich ausgestaltet sind, ein exaktes Zentrieren der Etikette bezüglich der Compact Disk erlauben. Das gegenseitige Zentrieren übt somit auch eine Toleranzausgleichsfunktion aus. Ein Vorteil ist darin zu sehen, dass die Bauteile mit geringeren Toleranzanforderungen und dadurch kostengünstiger herstellbar sind. Auf Grund der geringen Toleranzanforderungen ist die erfindungsgemässe Vorrichtung, bestehend aus mehreren Bauteilen, auch einfach und kostengünstig zusammensetzbar.

Die beiden Gehäuseteile können über eine translatorische und/oder eine rotatorische Bewegung in eine derartige, die Etikette und den scheibenförmigen Artikel gegenseitig zentrierende Lage gebracht werden. In einer bevorzugten Ausführungsform sind die beiden Gehäuseteile um eine gemeinsame Drehachse gelagert.

In einer vorteilhaften Ausführungsform weist das erste Gehäuseteil eine ebene Auflagefläche für die Etikette beziehungsweise für die Verbundetikette auf, so dass diese in einem ersten Schritt auf die Auflagefläche aufgelegt und anschliessend die Trägerfolie und/oder die Greiflappen abgezogen werden, so dass die selbstklebende Fläche der Etikette gegen oben zu liegen kommt, ohne dass während des Abziehens der Trägerfolie und/oder der Greiflappen zum Beispiel Fingerabdrücke auf der selbstklebenden Fläche verursacht werden. Da die Finger nicht klebrig werden, ist sichergestellt, dass beim Entnehmen der CD aus dem zweiten Gehäuseteil keine klebrige Fingerabdrücke auf die vom Laser lesbare CD-Fläche übertragen werden, was später ein zuverlässiges Lesen der gespeicherten Information beeinträchtigen würde. In einer weiteren vorteilhaften Ausführungsform weist das erste Gehäuseteil einen Zapfen mit am Umfang verteilt angeordneten Federelementen auf, welche die Etikette entlang des Innenkreises derselben halten, was ein Aufwölben der Etikette verhindert und zudem Masstoleranzen des Innenkreises der Etiketten oder des Zapfens korrigierend aufnimmt. In einer weiteren vorteilhaften Ausführungsform ist der Zapfen schwimmend im ersten Gehäuseteil gehalten und wird während des Zusammenklappens der Gehäuseteile von einem am zweiten Gehäuseteil angeordneten Führungselement zentriert, so dass die Etikette trotz möglicher unterschiedlicher Masstoleranzen der Gehäuseteile und des Zapfens exakt zentriert gegenüberliegend der CD angeordnet wird.

Die erfindungsgemässe Vorrichtung wird an Hand mehrerer Ausführungsbeispiele im Detail beschrieben. Es zeigen:
- Fig. 1: eine Explosionsdarstellung einer Vorrichtung zum Aufbringen einer selbstklebenden Etikette auf einen scheibenförmigen Artikel, insbesondere auf eine Compact Disk;
- Fig. 2a: eine perspektivische Untenansicht auf die Vorrichtung gemäss Fig. 1 mit einem ersten Gehäuseteil und einem zweiten Gehäuseteil;
- Fig. 2b: eine perspektivische Ansicht halb von oben auf die Vorrichtung gemäss Fig. 2a;
- Fig. 3: einen Längsschnitt durch die Vorrichtung in Schliess- beziehungsweise Verriegelungsstellung;
- Fig. 4a: eine perspektivische Ansicht der Vorrichtung in der Schliessstellung;
- Fig. 4b: eine perspektivische Ansicht der Vorrichtung in einer halb offenen Stellung;
- Fig. 4c: eine perspektivische Ansicht der Vorrichtung in Offenstellung;
- Fig. 5: eine seitliche Explosionsdarstellung der Vorrichtung in der halb offenen Stellung;
- Fig. 6a, 6b: zwei perspektivische Ansichten einer als Zapfen ausgestalteten Haltevorrichtung des ersten Gehäuseteils;
- Fig. 7a, 7b: zwei perspektivische Ansichten einer weiteren Ausführungsform eines Betätigungsmittels des zweiten Gehäuseteils;
- Fig. 8a: eine perspektivische Ansicht einer weiteren Ausführungsform des zweiten Gehäuseteils;
- Fig. 8b: einen Längsschnitt durch eine weitere Ausführungsform des zweiten Gehäuseteils;
- Fig. 9a, 9b, 9c: eine perspektivische Ansicht einer als beschriftbarer Bogen ausgestalteten Verbundetikette;
- Fig. 9d, 9e: eine herausgetrennte Etikette;
- Fig. 10a,10b,10c: eine perspektivische Ansicht eines weiteren Ausführungsbeispieles einer als beschriftbarer Bogen ausgestalteten Verbundetikette;
- Fig. 11a, 11b: ein weiteres Ausführungsbeispiel einer Verbundetikette.

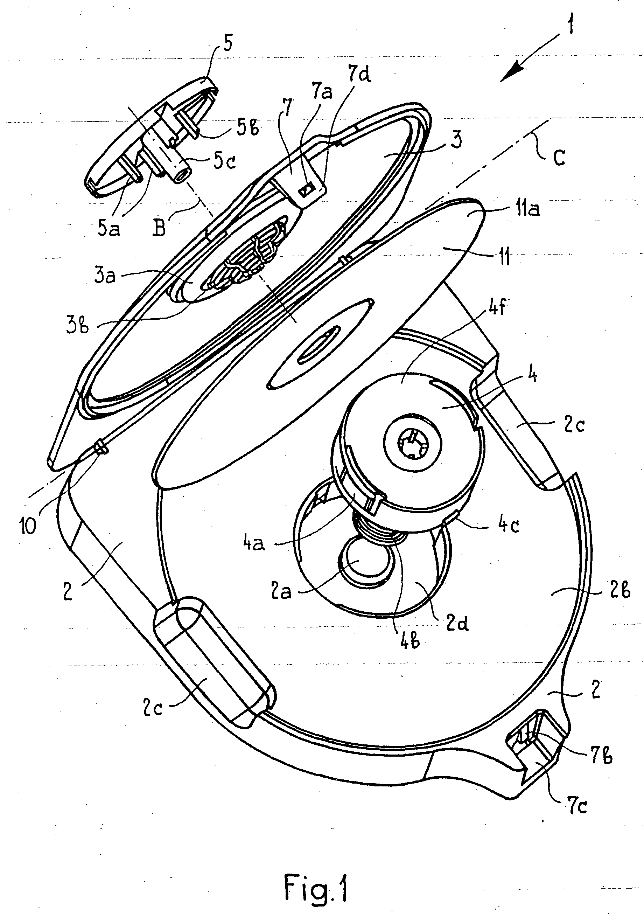

Fig. 1 zeigt die einzelnen Bestandteile einer Vorrichtung 1 zum exakt zentrischen Aufbringen einer selbstklebenden Etikette auf einen als Compact Disk 11a ausgebildeten scheibenförmigen Artikel 11. Ein erstes Gehäuseteil 2 ist als ein Gehäuseboden ausgestaltet und weist eine ebene, kreisförmige Auflagefläche 2b für eine selbstklebende Etikette 12e, wie in Fig. 2b dargestellt, auf. Im Zentrum dieser Auflagefläche 2b ist eine Absenkung 2d zur Aufnahme einer Haltevorrichtung 4 vorgesehen. Das erste Gehäuseteil 2 weist zwei gegenüberliegend angeordnete Ausnehmungen 2c auf, die einerseits als Eingriff für die Finger einer Bedienungsperson dienen, um die Vorrichtung 1 auf angenehme Weise zu betätigen, und andererseits die Etikette 12e gut zugänglich machen. Die Haltevorrichtung 4 für die Etikette 12e ist im dargestellten Ausführungsbeispiel als ein Zapfen 4f ausgestaltet, der an dessen Umfang zwei, vorzugsweise jedoch drei oder mehr angeordnete Federelemente 4a aufweist, welche, wie in Fig. 2b dargestellt, mit einem Innenkreis der Etikette 12e beziehungsweise der Verbundetikette 12 in Wirkverbindung sind.

Der Zapfen 4f ist durch Haltenasen 4c in vertikaler Richtung gleitbar in Führungsöffnungen 2e des ersten Gehäuseteils 2 gehalten, wobei der Zapfen 4f durch eine Spiralfeder 4b, die über einen Nocken 2a zentriert bezüglich der Absenkung 2d gehalten ist, gegen oben vorgespannt gehalten ist. Der Durchmesser der Absenkung 2d ist leicht grösser ausgestaltet als der Aussendurchmesser des Zapfens 4f, so dass dieser frei schwimmend bezüglich einer axial zum Zapfen 4f verlaufenden Richtung als auch bezüglich einer radial zum Zapfen 4f verlaufenden Richtung in der Absenkung 2d des ersten Gehäuseteils 2 gehalten ist. Die Federelemente 4a liegen leicht an der Wand der Absenkung 2d an und werden beim Überziehen der Etikette 12e durch deren Innenkreis 12k leicht nach innen gespannt. Ein zweites Gehäuseteil 3 ist über ein Scharnier 10, unter Ausbildung einer gemeinsamen Drehachse C, fest mit dem ersten Gehäuseteil 2, auch Gehäuseboden genannt, verbunden. Das zweite Gehäuseteil 3 weist eine Haltevorrichtung 3b zum Halten der Compact Disk 11a in einer konzentrisch und senkrecht zu einer ersten Achse A verlaufenden Lage auf. Die Haltevorrichtung 3b ist als eine für CDs 11a allgemein bekannte Schnappverbindung, bestehend aus acht einzelnen Federbeinen, ausgebildet. Die Haltevorrichtung 3b ist über eine federnde Membrananordnung 3a mit dem restlichen Teil des zweitens Gehäuseteils 3, auch Gehäusedeckel genannt, verbunden. Weiter ist ein Betätigungsmittel 5 mit Federzungen 5a, Haltenasen 5b und einem zylinderförmigen Zentrierzapfen 5c dargestellt. Beide Gehäuseteile 2,3 weisen auf der gemeinsamen Drehachse C gegenüberliegenden Seite Verriegelungsteile 7a,7b auf, nämlich eine Verschlussnase 7b, in welche eine Ausnehmung 7a in einer Verriegelungsstellung eingreift. Diese Verriegelungsstellung wird dadurch bewirkt, dass, wenn die beiden Gehäuseteile 2,3 in der Schliessstellung aufeinanderliegend angeordnet sind, ein Verriegelungsteil 7d manuell leicht zum ersten Gehäuseteil 2 hin gedrückt wird und somit die Verschlussnase 7b mit der Ausnehmung 7a verriegelt. Eine Ausnehmung 7c ist im ersten Gehäuseteil 2 vorgesehen, so dass das Verriegelungsteil 7d mit dem Finger nach aussen gezogen werden kann, um die Verriegelungsstellung wieder aufzulösen.

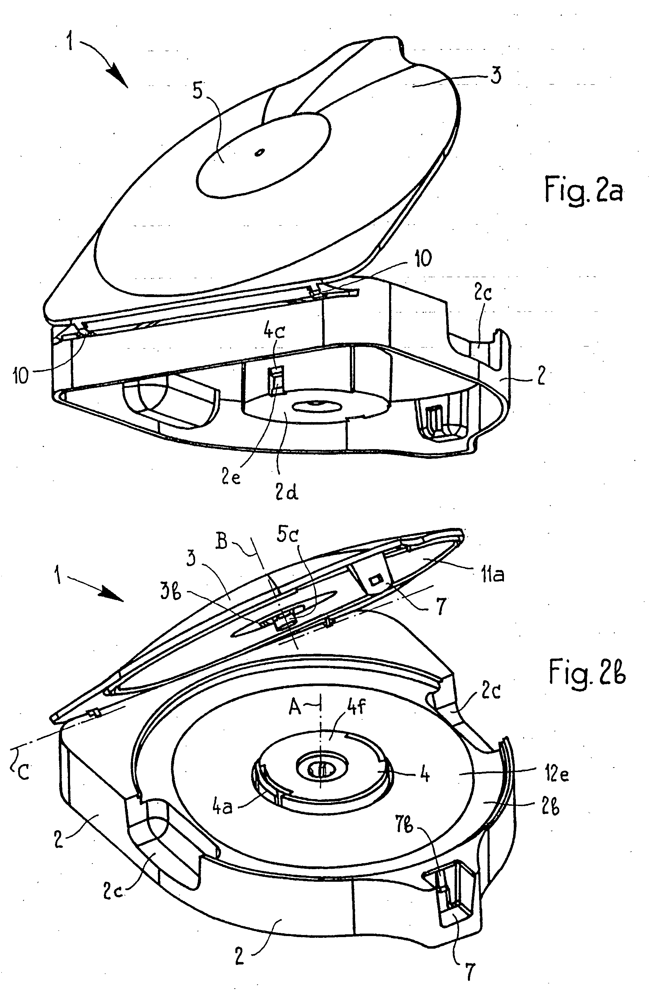

Aus der Untenansicht gemäss Fig. 2a ist der Eingriff einer der Haltenasen 4c in eine der Führungsöffnungen 2e der Absenkung 2d ersichtlich, wobei die Führungsöffnung 2e eine begrenzte Bewegung der Haltevorrichtung 4 in Verlaufsrichtung der Führungsöffnungen 2e zulässt. Ein als Knopf ausgestaltetes Betätigungsmittel 5 ist angepasst an die Kontur des zweiten Gehäuseteils 3 verlaufend angeordnet.

Fig. 2b zeigt eine weitere perspektivische Ansicht der Vorrichtung gemäss Fig. 2a. Die Etikette 12e ist mit der Klebeseite nach oben auf der Auflagefläche 2b des ersten Gehäuseteils 2 aufgelegt. Die als Zapfen 4f ausgestaltete Haltevorrichtung 4 spannt mit den Federelementen 4a den Innenkreis 12k der Etikette 12e und nimmt die Masstoleranzen des Innenkreises 12k auf. Die Etikette 12e ist durch den Zapfen 4f konzentrisch und senkrecht bezüglich der ersten Achse A verlaufend gehalten. Der Zapfen 4f ist in zur ersten Achse A radialer Richtung geringfügig beweglich gelagert. Im zweiten Gehäuseteil 3 ist die Compact Disk 11a durch die Haltevorrichtung 3b in einer konzentrisch und rechtwinklig verlaufenden Lage bezüglich einer zweiten Achse B gehalten. Während des Drehens des zweiten Gehäuseteils 3, nämlich des Gehäusedeckels, um die gemeinsame Drehachse C werden die beiden Haltevorrichtungen 3b,4 immer näher zusammengeführt, derart, dass die Haltevorrichtungen 3b,4 bei geschlossenem zweitem Gehäuseteil 3 in einer gegenüberliegenden Lage angeordnet sind. Diese Lage wird auch als Schliessstellung bezeichnet. Der zweite Gehäuseteil 3 weist einen zylinderförmigen Zentrierzapfen 5c auf, der, wenn der zweite Gehäuseteil 3 beinahe geschlossen ist, in eine Zentrierausnehmung 4g des Zapfens 4f eingreift, wobei der Zapfen 4f gegebenenfalls in zur ersten Achse A radialer Richtung leicht verschoben wird, so dass die Achsen A und B deckungsgleich verlaufen, so dass die CD 11a und die Etikette 12e exakt konzentrisch verlaufend und übereinander ausgerichtet angeordnet sind.

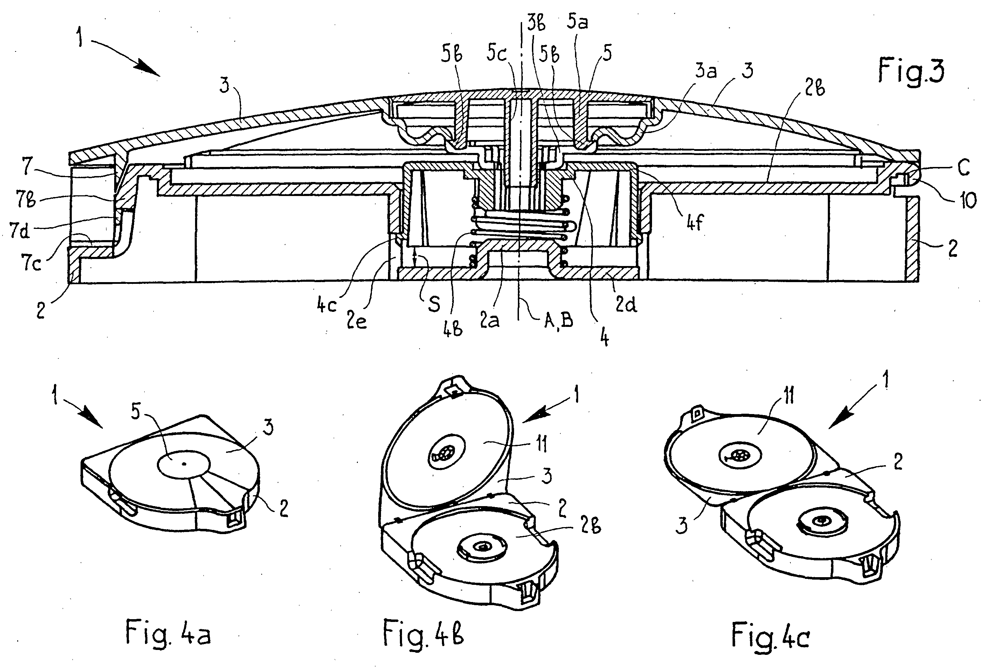

Fig. 3 zeigt einen Längsschnitt durch die Vorrichtung 1 in der Verriegelungsstellung. In dieser Stellung ist das Verriegelungsmittel 7 geschlossen. An Hand von Figur 3 wird jedoch auch die Schliessstellung beschrieben. Die Schliessstellung unterscheidet sich von der Verriegelungsstellung dadurch, dass das Verriegelungsmittel 7 geöffnet ist. Das Verriegelungsmittel 7 ist derart ausgestaltet, dass es in der Schliessstellung nicht selbsttätig verriegelt, sondern geöffnet bleibt, so dass die Vorrichtung 1 aus der Schliessstellung ohne Betätigung des Verriegelungsmittels 7 wieder in eine Offenstellung überführbar ist. Die Vorrichtung 1 kann jedoch aus der Schliessstellung in die Verriegelungsstellung überführt werden, indem das Verriegelungsmittel 7 manuell derart betätigt wird, dass das Verriegelungsmittel 7, wie in Fig. 3 dargestellt, verriegelt. Der besseren Übersichtlichkeit wegen sind in Fig. 3 die innerhalb der Vorrichtung angeordnete CD 11a sowie die Etikette 12e nicht dargestellt. Die als Zapfen 4f ausgestaltete Haltevorrichtung 4 weist einen durch die Führungsöffnung 2e bestimmten maximalen Hub S auf. Die federnde Membrananordnung 3a in der Mitte des zweiten Gehäuseteils 3 ist im inneren Bereich mit der Haltevorrichtung 3b und im äusseren Bereich mit dem gewölbt ausgestalteten Gehäusedeckel 3 verbunden. Das als Knopf ausgestaltete Betätigungsmittel 5 ist in Verlaufsrichtung der zweiten Achse B beweglich im Gehäusedeckel 3 gehalten. Kurz bevor der Gehäusedeckel 3 vollständig geschlossen beziehungsweise in der Schliessstellung ist, gelangt der zylinderförmige Zentrierzapfen 5c in die Zentrierausnehmung 4g des Zapfens 4f, so dass die radiale Lage des Zapfens 4f, sofern notwendig, derart korrigiert wird, dass die beiden Achsen A und B einen deckungsgleichen Verlauf einnehmen. Dabei wird die radiale Lage der von der Haltevorrichtung 4 gehaltenen Etikette 12e entsprechend verändert. Der in den Zapfen 4f eindringende Teilabschnitt des zylinderförmigen Zentrierzapfens 5c kann teilweise konisch verlaufend ausgestaltet sein. Nachdem der Gehäusedeckel 3 in die Schliessstellung gebracht worden ist, sind die CD und die Etikette 12e immer noch in Verlaufsrichtung der Achsen A und B beabstandet angeordnet. Durch einen leichten Druck auf den Knopfs in Verlaufsrichtung der Achsen A,B gleitet dieser in Verlaufsrichtung der Achsen A,B zum Gehäuseboden 2 hin, wobei eine Federspannung aufgebaut wird, die den Knopf 5 beim Loslassen wieder in die Ausgangslage zurückgleiten lässt. Durch das Verschieben des Knopfes 5 in Richtung des Gehäusebodens 2 dringt der zylinderförmige Zentrierzapfen 5c weiter in den Zapfen 4f ein, wobei der Innenrand der CD 11a auf dem Zapfen 4f zur Auflage kommt und während des weiteren Absenkens des Knopfes 5 den
Zapfen 4f nach unten drückt, bis die CD 11a flächig auf der auf der Auflagefläche 2b aufliegenden Etikette 12e aufliegt, so dass die Etikette 12e in einer zur CD 11a konzentrischen Lage auf diese geklebt wird. Während ciesem Vorgang gleiten auch die beiden am Innenkreis 12k der Etikette 12e anliegenden Federelemente 4a nach unten, so dass die Etikette 12e auch im Bereich des Innenkreises 12k eben auf der Auflagefläche 2b aufliegt, womit gewährleistet ist, dass die Etikette 12e während der Kontaktphase zur CD vollständig eben aufliegt. Die CD 11a wird somit konzentrisch zur Etikette 12e verlaufend und parallel zur Etikette 12e verlaufend auf diese aufgelegt, so dass die Etikette 12e in der gewünschten, genau definierten, und wiederholbar reproduzierbaren Lage aufgeklebt wird. Nach dem Klebevorgang wird der Knopf 5 losgelassen, worauf dieser auf Grund der Federspannung in die Ausgangslage zurückschnappt. Daraufhin wird der Gehäusedeckel 3 in die Offenstellung zurückgeschwenkt, so dass die in der Haltevorrichtung 3b gehaltene CD 11a dieser entnommen werden kann.

Die Figuren 4a,4b,4c zeigen unterschiedliche Stellungen der beiden Gehäuseteile 2,3. Fig. 4a zeigt die Vorrichtung 1 in der Schliessstellung. Fig. 4b zeigt die zur Hälfte geöffnete Vorrichtung 1. Fig. 4c zeigt die Vorrichtung 1 in vollständiger Offenstellung. In dieser Lage wird die CD 11a vorteilhafterweise entnommen, die neue CD 11a in das zweite Gehäuseteil 3 eingelegt, und die Etikette 12e in das erste Gehäuseteil 2 eingelegt. Die Schliessstellung gemäss Fig. 4a kann in die Verriegelungsstellung überführt werden, in dem das Verriegelungsmittel 7 betätigt wird, sodass, wie beispielsweise in Fig. 3 dargestellt, das Verschlussteil 7d in die Haltenase 7b eingreift. Nach Beendigung der Etikettierarbeit wird die Vorrichtung 1 derart verriegelt, dass das Gerät kompakt gelagert werden kann und der Innenraum zum Beispiel vor Verunreinigungspartikel wie Staub geschützt ist. Zum Lagern der Vorrichtung 1 ist der Gehäuseboden 2 fest mit dem Gehäusedeckel 3 zu verriegeln. Ohne eine Verriegelung würde der Zentrierzapfen 4 auf Grund der Spannkraft der Spiralfeder 4b den Gehäusedeckel 3 ständig nach oben drücken und in einer leicht geöffneten Stellung halten, so dass die Vorrichtung 1 nicht kompakt verstaut werden könnte und der Innenraum zudem durch Staubpartikel verunreinigt würde. Zum Entriegeln der Vorrichtung 1 ist das Verriegelungsmittel 7 wieder zu lösen, was im Ausführungsbeispiel gemäss Fig. 3 dadurch erfolgt, dass mit einem Fingernagel das Verriegelungsteil 7d nach vorne gezogen wird und sich dabei die Verbindung zur Verschlussnase 7b löst.

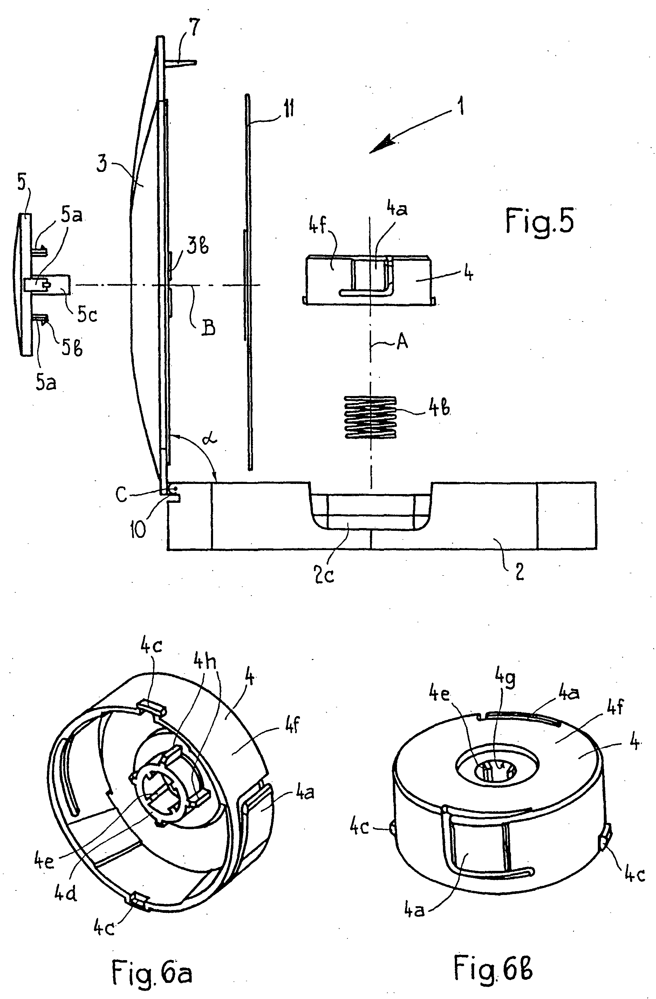

Fig. 5 zeigt in einer Explosionsdarstellung eine Seitenansicht der Vorrichtung 1, wobei die Haltevorrichtung 4 und die Spiralfeder 4b in Verlaufsrichtung der zweiten Achse B angeordnet sind. Die beiden Gehäuseteile 2,3 sind um die gemeinsame Achse C um einen Winkel α von 90 Grad geschwenkt.

Fig. 6a und 6b zeigen je eine perspektivische Ansicht einer als Zapfen 4f ausgestalteten Haltevorrichtung 4, die auf der Unterseite gemäss Fig. 6a ein Zentrierteil 4d mit vier in achsialer Richtung A verlaufenden Federspannrippen 4h für die Spiralfeder 4b, sowie im Zentrum des Zapfens 4f eine Zentrierausnehmung 4g mit vier in Richtung der ersten Achse A verlaufenden, über den Umfang verteilt angeordneten Führungselementen 4e, die mit dem zylinderförmigen Zentrierzapfen 5c in Wirkverbindung treten, aufweist.

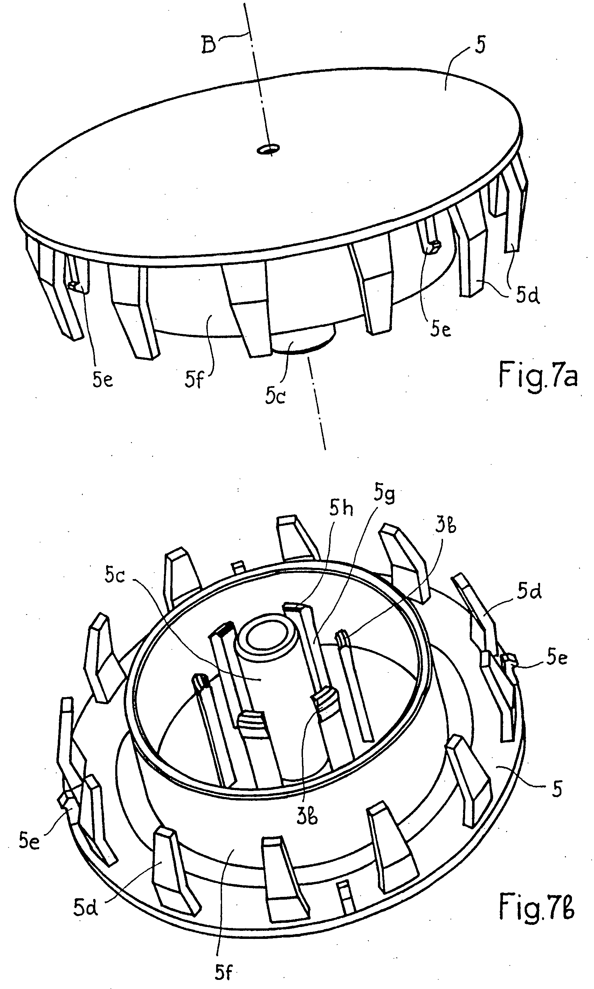

Fig. 7a und 7b zeigen je eine perspektivische Ansicht einer weiteren Ausführungsform des als knopf ausgestalteten betätigungsmittels 5 mit dem zylinderförmigen Zentrierzapfen 5c.

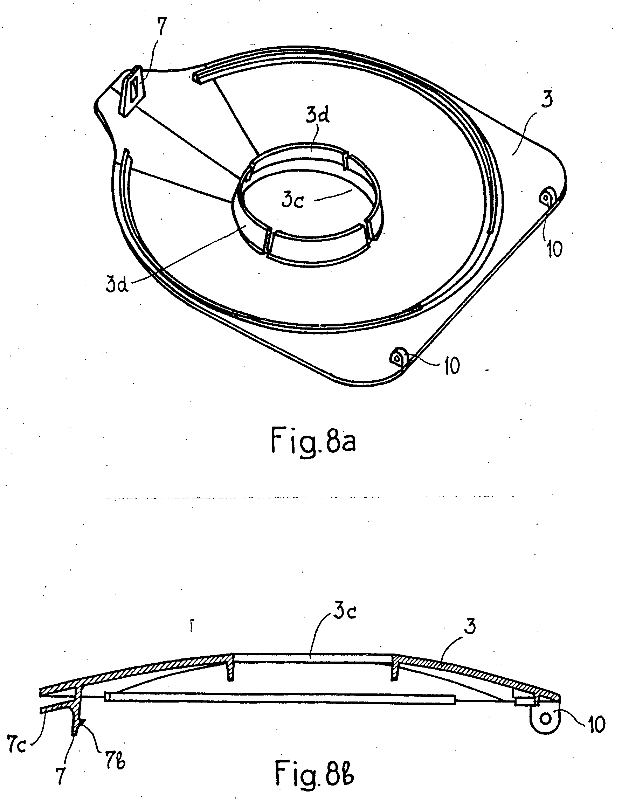

Fig. 8a zeigt ein weiteres Ausführungsbeispiel des zweiten Gehäuseteils 3 mit Scharnieren 10 und dem Verriegelungsmittel 7. Der zweite Gehäuseteil 3 ist steif ausgestaltet und weist im Zentrum eine kreisförmige Ausnehmung 3c mit vier in Umfangsrichtung verlaufenden, zum freien Ende hin sich verjüngenden Flanschsegmenten 3d auf. Der zweite Gehäuseteil 3 umfasst gemäss Fig. 8a das als Knopf angepasst ausgestaltete Betätigungsmittel 5, das in den Figuren 7a und 7b im Detail dargestellt ist. Das Betätigungsmittel 5 weist eine Mehrzahl in Umfangsrichtung verteilt angeordnete Federbeine 5d auf, die bei dem im zweiten Gehäuseteil 3 eingesetzten Betätigungsmittel 5 an Flanschsegmenten 3d anliegen. Beim Hineindrücken des Knopfförmigen Betätigungsmittels 5 in Richtung der zweiten Achse B verformen sich die elastisch ausgestalteten Federbeine 5d entlang den steif ausgestalteten Flanschsegmenten 3d, was eine entgegen der Betätigungsrichtung wirkende Kraft erzeugt. Nach dem Loslassen des Knopfes 5 entspannen sich die Federbeine 5d wobei der Knopf 5 in seine ursprüngliche Ausgangslage zurückkehrt. Das Betätigungsmittels (vergl. Fig. 7a und 7b) ist über vier am Umfang verteilt angeordnete Halteelemente 5e aufweisende Haltenasen 5h mit dem zweiten Gehäuseteil 3 verbunden, wobei diese Halteelemente 5e in den Zwischenräumen der Flanschsegmente 3d (Fig. 8a) angeordnet sind. Das Betätigungsmittel 5 weist eine Haltevorrichtung für die Compact Disk 11a auf, indem sechs Federzungen 5g mit den Haltenasen 5h zum Halten vorgesehen sind, wobei das Betätigungsmittel 5 zudem ein Auflageelement 5f umfasst, das einerseits zur Versteifung des Betätigungsmittels 5 dient und andererseits eine Auflagefläche für die Compact Disk 11a bildet, so dass die CD in Verbindung mit den Haltenasen 5h zuverlässig und lösbar gehalten ist. Weiter weist das Betätigungsmittel 5 einen zylinderförmigen Zentrierzapfen 5c auf, der, wie bereits ausführlich beschrieben, zum gegenseitigen Zentrieren der Etikette 12e mit der Compact Disk 11a dient. Als Alternative zu den Federbeinen 5d kann auch eine im Betätigungsmittel 5 und mit dem zweiten Gehäuseteil 3 zusammenwirkende Spiralfeder vorgesehen sein, um die rückstellende Kraft zu erzeugen. Die Gehäuseteile 2,3 sowie das Betätigungsmittel 5 sind vorzugsweise aus einem Kunststoff, z.B. aus einem Thermoplast gefertigt.

Das in Fig. 8b mit einem Längsschnitt dargestellte zweite Gehäuseteil 3 ist mit Ausnahme des Verriegelungsmittels 7 identisch dem zweiten Gehäuseteil 3 gemäss Fig. 8a ausgestaltet. Das Verriegelungsmittel 7 gemäss Fig. 8b weist eine Haltenase 7b auf, die in eine im ersten Gehäuseteil 2 befindliche Durchbrechung eingreifen kann, wenn der zweite Gehäuseteil 3 mit dem ersten Gehäuseteil 2 zu verriegeln ist. Das Verriegelungsteil 7 weist einen Betätigungshebel 7c auf, um die Haltenase 7b mit der nicht dargestellten Durchbrechung in Eingriff zu bringen, und dadurch den Gehäusedeckel 3 mit dem Gehäuseboden 2 zu verriegeln oder zu entriegeln.

Im ersten oder im zweiten Gehäuseteil 2,3 kann eine vorzugsweise batterielose Zählvorrichtung angeordnet sein, die, zum Beispiel mit einer Solarzelle oder einer Piezoelektronik betrieben, beim Schliessen des Gehäuses einen Impuls erzeugt, diesen addiert und auf einer Anzeige in zum Beispiel numerischer Darstellung anzeigt, so dass jederzeit abgelesen werden kann wie viele CDs bereits mit einer Etikette versehen wurden. Diese elektronische Vorrichtung weist einen Ein- und Ausschalter sowie eine Rücksetztaste auf. Zudem könnte ein Grenzwertvorgabe vorgesehen sein sowie ein Signalgeber, der beim Erreichen des Grenzwertes ein optisches oder akustisches Signal auslöst, um anzuzeigen, dass die durch den Grenzwert vorgegebene Anzahl CDs mit einer Etikette versehen wurden.

Die erfindungsgemässe Vorrichtung zum Aufbringen einer selbstklebenden Etikette 12e erfordert eine entsprechend angepasst ausgestaltete Verbundetikette 12, die einerseits leicht beschriftbar bzw. bedruckbar ist, entweder von Hand oder mit einem handelsüblichen Druckmittel wie beispielsweise einem Laserdrucker oder einem Tintenstrahldrucker, und andererseits auf einfache Weise in die erfindungsgemässe Vorrichtung 1 einlegbar ist und insbesondere eine Berührung der klebrigen Oberfläche der Etikette 12e mit den Fingern ausschliesst.

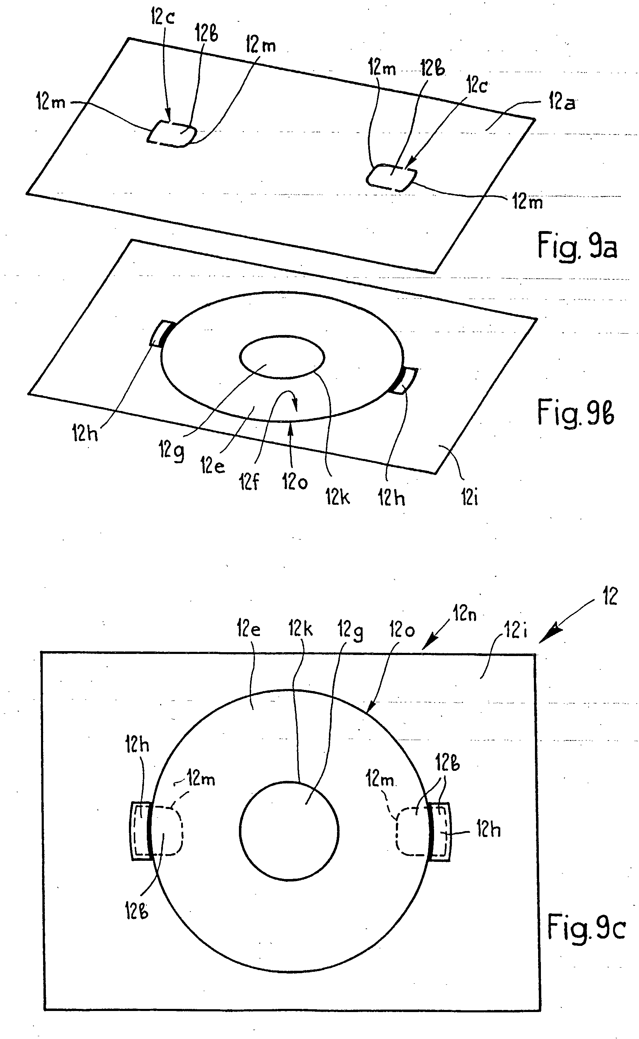

Fig. 9c zeigt eine Aufsicht auf eine der erfindungsgemässen Vorrichtung angepassten, als beschriftbarer Bogen 12n ausgestaltete Verbundetikette 12, in welche die Etikette 12e für eine Compact Disk eingestanzt ist. Die Verbundetikette 12 umfasst ein in Fig. 9a als Trägerfolie ausgestaltetes Trägermaterial 12a, ein in Fig. 9b dargestelltes, beschriftbares Etikettmaterial 12i und ein nicht dargestelltes, zwischen der Trägerfolie 12a und dem Etikettmaterial 12i gleichmässig flächig verteiltes Klebemittel. Das Etikettmaterial 12i weist eine freigestanzte Etikette 12e, eine freigestanzte Innenfläche 12g mit dem Innenkreis 12k, sowie zwei gegenüberliegend angeordnete und bezüglich der Etikette 12e anschliessende und in radialer Richtung vorstehende, freigestanzte Greiflappen 12h auf. Zumindest die Oberfläche 12f der Etikette 12e ist mit einem Druckmittel beschriftbar, wobei das Etikettmaterial 12i sowie das Trägermaterial 12a flächenförmig und flexibel ausgestaltet ist, so dass die Oberfläche über den Aussenkreis 120 der Etikette 12e hinaus beschriftbar ist, um sicherzustellen, dass die gesammte Oberfläche 12f der Etikette 12e beschriftbar ist und keine unbeschrifteten Ränder aufweist. Die flexible Ausgestaltung erlaubt ein Umlenken der Verbundetikette 12, wie dies zum Beispiel in einem Laserdrucker erforderlich ist. Die Trägerfolie 12a ist entsprechend dem Etikettmaterial 12i angepasst ausgestaltet und weist zwei gestanzte Trägerfolienteile 12b auf, die bis auf jeweils zwei Haltebrücken 12c freigestanzt sind. Diese Schnitte 12m könnten auch nicht durchgehend freigestanzt als Sollbruchlinien 12m ausgestaltet sein, indem diese eine Perforation aufweisen. Der Schnitt 12m bzw. die Sollbruchlinie 12m verläuft dabei abschnittsweise in Umfangsrichtung der Etikette 12e über den peripheren Rand 120 vorstehend. Aus der Aufsicht der Verbundetikette 12 gemäss Fig. 9c ist die gegenseitige Anordnung des Etikettmaterials 12i bezüglich der unterhalb angeordneten Trägerfolie 12a ersichtlich. Der strichliert dargestellte Schnitt 12m bzw. die Sollbruchlinie 12m bildet eine umlaufende Begrenzung des Trägerlappens 12b, wobei der aus Etikettmaterial 12i bestehende Greiflappen 12h und der Trägerlappen 12b derart gegenseitig angeordnet sind, dass der Trägerlappen 12b teilweise am Greiflappen 12h und teilweise an der Etikette 12e anliegt. Das strichliert dargestellte Trägerfolienteil 12b verbindet die Etikette 12e und den Greiflappen 12h, wobei die Kontur des Greiflappenträgerfolienteils 12b gegenüber dem Greiflappen 12h leicht kleiner ausgestaltet ist, so dass der Aussenrand des Greiflappens 12h an der umgebenden Trägerfolie 12a klebt. Durch diese Ausgestaltung ist sichergestellt, dass beim Bedrucken der Etikette 12e, insbesondere wenn der Bogen 12n in einem Drucker um eine Umlenkrolle geführt wird, sich die Greiflappen 12h nicht ablösen und aufstehen. Eine beschriftete oder bedruckte Etikette 12e wird auf einfache Weise derart aus dem Bogen 12n herausgelöst, dass die Greiflappen 12h beziehungsweise die Trägerfolienteile 12b, bezüglich der Darstellung gemäss Fig. 9c von unten, hochgedrückt werden, worauf die Haltebrücken 12c brechen, und die Etikette 12e aus dem Bogen 12n lösbar ist. Die selbstklebende Oberfläche der Etikette 12e liegt somit, mit Ausnahme der Trägerfolienteile 12b, frei und getrennt von der Trägerfolie 12a. Die Etikette 12e wird, beidseitig gehalten an den beiden Greiflappen 12h und mit der Klebeseite nach oben, über den Zapfen 4f des ersten Gehäuseteils 2 der Vorrichtung 1 gestreift und flach auf die Auflagefläche 2b gelegt. Die Etikette 12e wird derart eingelegt, dass die Greiflappen 12h im Bereich der Ausnehmungen 2c vorstehen und leicht zugänglich sind. Die Greiflappen 12h werden daraufhin auf einfache Weise mit dem verbleibenden Trägerfolienteil 12b durch eine Abkantbewegung von der Etikette 12e gelöst und abgezogen, so dass die Etikette 12e, wie in Fig. 2b dargestellt, mit der beschrifteten Fläche 12f nach unten und der Klebeseite nach oben ausgerichtet in der Vorrichtung 1 liegt. Die Finger haben somit nie Kontakt zur Klebeseite der Etikette 12e gehabt. Jede Etikette 12e ist somit sauber und ohne Spuren von Fingerabdrücken klebbar. Zudem entstehen keine klebrigen Finger, die insbesondere beim Herausnehmen der beschrifteten CD diese beschmutzen könnten, wobei insbesondere die Laser lesbare Seite der CD sehr empfindlich bezüglich einer derartigen Verschmutzung ist. Die erfindungsgemässe Vorrichtung 1 in Kombination mit dem entsprechend angepasst ausgestalteten Bogen 12n mit Verbundetiketten 12 erlaubt es somit eine Vielzahl von CDs mit exakt zentriert und sauber angeordneten Etiketten 12e zu beschriften.

In einer besonders vorteilhaften Ausführungsform weist die Verbundetikette 12 gemäss den Figuren 9a,9b,9c keine Haltebrücken 12c und somit ein bezüglich der Trägerfolie 12a vollständig freigestanztes Trägerfolienteil 12b auf. Das Trägerfolienteil 12b weist somit einen durchgehenden Schnitt 12m auf. Bei einer derart ausgestalteten Verbundetikette 12 lässt sich die Etikette 12e besonders leicht vom Trägermaterial 12a lösen, indem einer der beiden Greiflappen 12h ergriffen und hochgezogen wird. Das am Greiflappen 12h haftende Trägerfolienteil 12b folgt dieser Bewegung und zieht während der nachfolgenden Bewegung die Etikette 12e ab, wobei gegen Ende des Abziehvorganges das gegenüberliegende Trägerfolienteil 12b gelöst und danach der daran haftende Greiflappen 12h abgezogen wird, so dass die von der Trägerfolie 12a losgelöste Etikette 12e, ähnlich wie in Fig. 9d,9e dargestellt, zum Einlegen in die erfindungsgemässe Vorrichtung zur Verfügung steht.

Fig. 9e zeigt ein weiteres Ausführungsbeispiel einer aus dem Bogen 12n bzw. der Verbundetikette 12 herausgetrennten Etikette 12e, mit einer Aufsicht auf die Klebeseite 121 und den beiden Trägerfolienteilen 12b, welche die Greiflappen 12h halten. Fig. 9d zeigt eine Aufsicht der Etikette 12e der Verbundetikette 12 gemäss Fig. 9e mit beschriftbarer Oberfläche 12f und Greiflappen 12h. Die Etikette 12e kann aus einer Vielzahl beschriftbarer Materialien hergestellt sein, insbesondere aus Papier oder einem folienartigen Kunststoff, beispielsweise einer transparenten Folie, oder einer laminierten Metallfolie. Auf die Etikette 12e kann auch ein Sicherheitscode aufgebracht werden, z.B. mit einem Beschriftungsmittel, das nur bei Infrarotlicht sichtbar wird. Dies erlaubt z.B. die Kennzeichnung der Etikette 12e mit einem Gütezeichen eines Herstellers oder ermöglicht speziellen Anwendern einen Originalitätsnachweis. Die Sicherheitscodes können in unterschiedlicher, bereits bekannter Art vorgesehen werden. Die Etikette 12e ist mit Zeichen beschriftbar, kann jedoch auch mit einer Abbildung oder Grafik bedruckt werden, oder mit einer maschinenlesbaren Kennzeichnung wie beispielsweise einem Strichcode versehen werden.

Die erfindungsgemässe Vorrichtung 1 erlaubt zudem zwischen der Etikette 12e und dem scheibenförmigen Artikel 11, insbesondere der Compact Disk 11a, weitere Gegenstände anzuordnen. Nach dem Einlegen der Etikette 12e auf die Auflagefläche 2b könnte ein weiterer Gegenstand, zum Beispiel ein Magnetstreifen, auf die Klebeseite 12e gelegt werden, und danach die CD 11a mit der Etikette 12e verklebt werden, so dass der Magnetstreifen zwischen der Etikette 12e und der CD 11b fest verklebt ist. Dieser Magnetstreifen ist vorzugsweise kreisförmig ausgestaltet und ebenfalls zentriert bezüglich der Drehachse der CD angeordnet. Auf einem derartigen Magnetstreifen können zusätzliche Informationen oder zum Beispiel ein Sicherheitscode gespeichert werden.

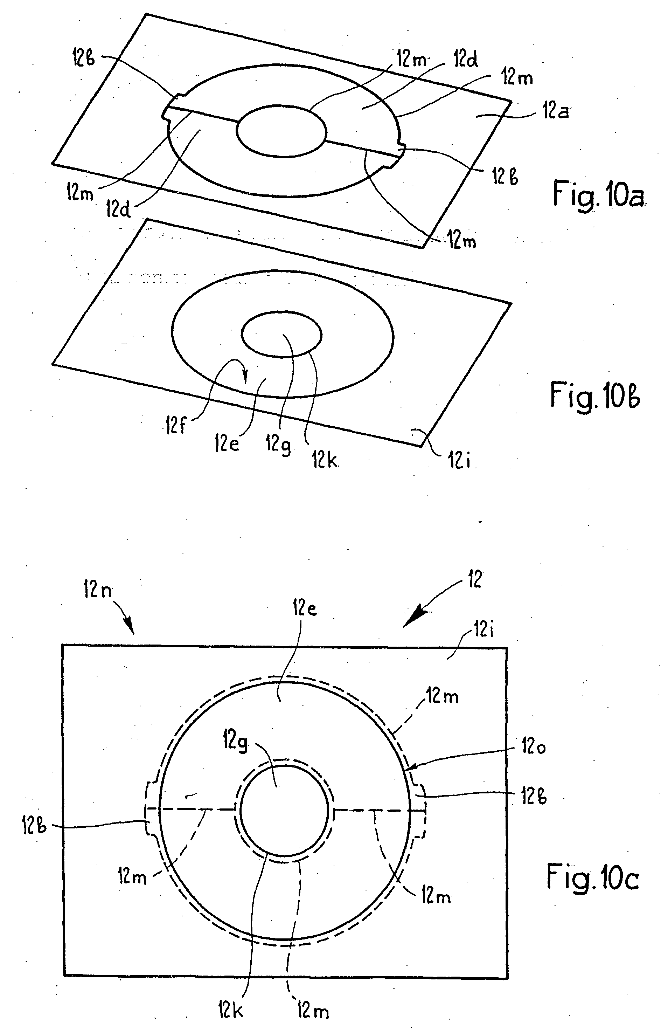

Die Figuren 10a, 10b und 10c zeigen ein weiteres Ausführungsbeispiel einer als beschriftbarer Bogen 12n ausgestalteten Verbundetikette 12, Fig. 10a zeigt das als Trägerfolie ausgestaltete Trägermaterial 12a, welches eine als Schnitt 12m oder Sollbruchlinie 12m ausgeführte Stanzung aufweist, so dass zwei Trägerfolienteile 12d mit vorstehenden Greiflappen 12b ausgestanzt sind. Fig. 10b zeigt das Etikettmaterial 12i, aus dem die Etikette 12e herausgestanzt ist. Fig. 10c zeigt eine Aufsicht der als Bogen 12n ausgestalteten Verbundetikette 12, wie diese für das Bedrucken vorgesehen ist. Die unten liegenden, strichliert dargestellten Schnitte 12m bzw. Sollbruchlinien 12m der Trägerfolie 12d,12a weisen einen leicht grösseren, über den peripheren Rand 12o der Etikette 12e über den gesamten Umfang vorstehenden Radius auf, so dass der beschriftbare Bogen 12n mit Etikette 12e und Trägerfolie 12a sowie Trägerfolienteilen 12d zusammengehalten ist. Nach dem Bedrucken der Etikette 12e wird die Innenfläche 12g herausgedrückt, wobei sowohl der Innenkreis der Trägerfoilenteile 12d als auch der Innenkreis 12k der Etikette 12e zum besseren Lösen einen Schnitt 12m bzw. eine als Mikroperforation ausgestaltete Sollbruchlinie 12m aufweisen. Der Innenkreis des Trägerfolienteils 12d sowie der Innenkreis 12k der Etikette 12e können deckungsgleich angeordnet und ausgestaltet sein, oder, wie in Fig. 10c dargestellt einen unterschiedlichen Radius aufweisen. Die Etikette 12e kann gemeinsam mit den Trägerfolienteilen 12d aus dem Bogen 12n herausgelöst und über den Zapfen 4f der Haltevorrichtung 4 der Vorrichtung 1 gestreift und eben verlaufend auf die Auflagefläche 2b aufgelegt. Daraufhin wird der vorstehende Trägerfolienteil 12b des einen Trägerfolienteils 12d erfasst und abgezogen und daraufhin der zweite Trägerfolienteil 12d ebenfalls erfasst und abgezogen, so dass die Klebeseite frei liegt und der zweite Gehäuseteil 3 in Schliessstellung überführbar ist. Der Bogen 12n kann in einem normierten Format, zum Beispiel im Format A4 oder A5 ausgestaltet sein.

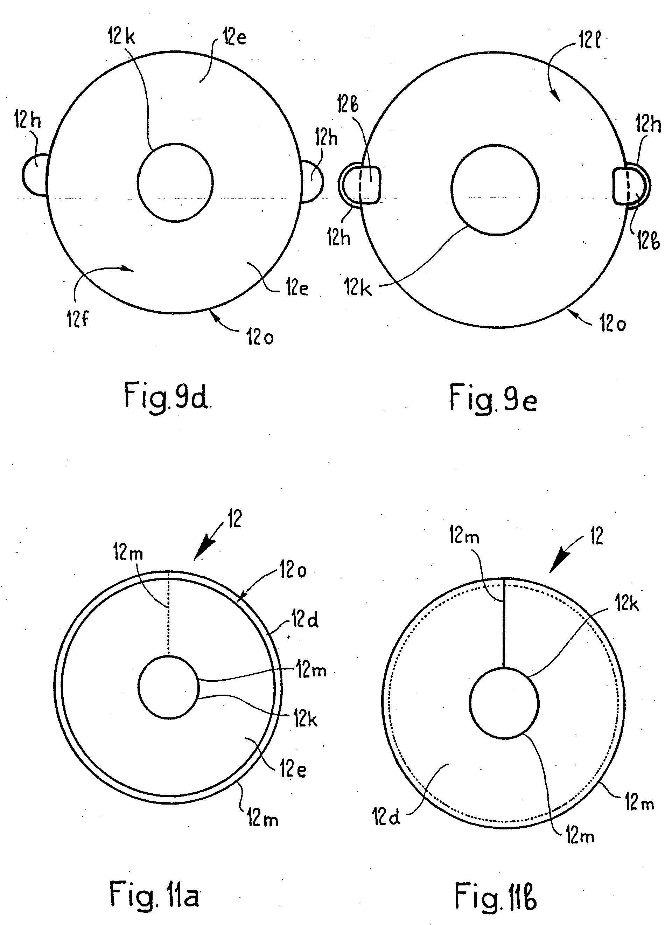

Fig. 11a zeigt eine Aufsicht auf die Etikette 12e eines weiteren Ausführungsbeispieles einer Verbundetikette 12. Das als Trägerfolienteil 12d ausgestaltete Trägermaterial weist einen leicht grösseren Radius auf als die Etikette 12e auf und steht daher bezüglich der Etikette 12e in radialer Richtung leicht vor. Die Schnittlinie 12m verläuft konzentrisch zur Etikette 12e. Das Trägerfolienteil 12d weist einen unten liegenden, und daher strichliert dargestellten, in radialer Richtung verlaufenden Schnitt 12m bzw. eine Sollbruchlinie 12m auf. Fig. 11b zeigt dieselbe Etikette 12e gemäss Fig. 11a, jedoch als Ansicht auf die Trägerfolie 12d. Die Verbundetikette 12 wird in der Stellung gemäss Fig. 11b über den Zapfen 4f der Haltevorrichtung 4 der Vorrichtung 1 gestreift und auf die Auflagefläche 2b des Zapfens 4f gelegt. Daraufhin wird das in radialer Richtung vorstehende Trägerfolienteil 12d im Bereich des radial verlaufenden Schnittes 12m bzw. der Sollbruchlinie 12m angehoben und mit einer kreisförmigen Handbewegung vollständig von der Etikette 12e gelöst, so dass die Klebeseite frei liegt. In einer bevorzugten Ausgestaltung weist die dargestellte Verbundetikette 12 keine Innenfläche 12g mehr auf, da dieses Zentrumsteil bereits bei der Herstellung vollständig herausgestanzt wird. Die Verbundetikette 12 gemäss Fig. 11a und 11b ist insbesondere geeignet von Hand beschriftet zu werden, um eine Compact Disk, zum Beispiel vergleichbar mit einem Label für eine Computer-Diskette, auf einfache Weise zu beschriften. Die Verbundetikette 12 gemäss Fig. 11a und Fig. 11b könnte auch eine Innenfläche 12g aufweisen, welche beispielsweise durch eine Perforation mit dem Trägerfolienteil 12d verbunden oder über einen Teil der Etikette 12e am Trägerfolienteil 12d gehalten ist.

In einer weiteren Ausführungsform könnte die Verbundetikette 12 gemäss dem Ausführungsbeispiel Fig. 9a, 9b, 9c mit einem Trägermaterial 12a ohne Schnitte 12m oder Sollbruchlinien 12m ausgestaltet sein. Die Greiflappen 12h des Etikettmaterials 12i sind über eine insbesondere perforierte Sollbruchlinie 12m mit der Etikette 12e verbunden. Zum Einlegen der Etikette 12e in die erfindungsgemässe Vorrichtung 1 wird die Etikette 12e mit den daran befestigten Greiflappen 12h vom Trägermaterial 12a gelöst und in die Vorrichtung 1 eingelegt. Danach werden die Greiflappen 12h entlang der Sollbruchlinie 12m abgetrennt.

Die in Fig. 9 und 10 dargestellten Ausführungsbeispiele von Verbundetiketten 12 weisen zumindest einen Greiflappen 12b bzw. 12h, vorzugsweise zwei, bezüglich der Etikette 12e radial gegenüberliegend angeordnete Greiflappen 12b, 12h auf. Das Ausführungsbeispiel gemäss Fig. 11a, 11b könnte ebenfalls zumindest einen fest mit dem Trägermaterial 12d verbundenen, in radialer Richtung vorstehenden Greiflappen 12b bzw. 12h aufweisen.

## Patentansprüche

1. Vorrichtung (1) zum Aufbringen einer selbstklebenden Etikette (12e) auf einen scheibenförmigen Artikel (11), insbesondere auf eine Compact Disk (11a), gekennzeichnet durch ein erstes Gehäuseteil (2) mit einer Haltevorrichtung (4) für die Etikette (12e) sowie ein zweites Gehäuseteil (3) umfassend eine Haltevorrichtung (3b) für den scheibenförmigen Artikel (11), wobei die Gehäuseteile (2,3) beweglich, insbesondere schwenkbar oder translatorisch beweglich miteinander verbunden und von einer Offenstellung in eine Schliessstellung überführbar sind, derart, dass in Schliessstellung die Haltevorrichtungen (3b,4) in einer gegenüberliegend angeordneten Lage positioniert sind, und dass in Schliessstellung zumindest eine der Haltevorrichtungen (3b,4) in Richtung zur gegenüberliegenden Haltevorrichtung (3b,4) beweglich im Gehäuseteil (2,3) angeordnet ist, um den scheibenförmigen Artikel (11) mit der Etikette (12e) in Berührung zu bringen.

2. Vorrichtung nach Anspruch 1, dadurch gekennzeichnet, dass die beiden Gehäuseteile (2,3) schwenkbar um eine gemeinsame Drehachse (C) gelagert sind.

3. Vorrichtung nach einem der Ansprüche 1 oder 2, dadurch gekennzeichnet, dass die Haltevorrichtung (4) für die Etikette (12e) einen zylinderförmigen Zapfen (4f) aufweist, um die Etikette (12e) in einer bezüglich einer ersten Achse (A) konzentrischen Lage zu halten, und dass die Haltevorrichtung (3b) für den Artikel (11) eine Schnappaufnahme aufweist, um insbesondere die Compact Disk (11a) bezüglich einer zweiten Achse (B) in einer konzentrischen und senkrecht verlaufenden Lage zu halten.

4. Vorrichtung nach Anspruch 3, dadurch gekennzeichnet, dass der Zapfen (4f) in Verlaufsrichtung der ersten Achse (A) als auch rechtwinklig zur ersten Achse (A) beweglich gehaltert ist, und dass der Zapfen (4f) in Richtung des zweiten Gehäuseteil (3) vorgespannt gehaltert ist.

5. Vorrichtung nach einem der Ansprüche 3 oder 4, dadurch gekennzeichnet, dass der Zapfen (4f) eine konzentrisch zur ersten Achse (A) verlaufende Zentrierausnehmung (4g) aufweist, dass das zweite Gehäuseteil (3) ein Betätigungsteil (5) mit einem konzentrisch zur zweiten Achse (B) verlaufenden, zylinderförmigen Zentrierzapfen (5c) umfasst, und dass der Zentrierzapfen (5c) und die Zentrierausnehmung (4g) derart gegenseitig angepasst und ineinandergreifbar ausgestaltet sind, dass die beiden Achsen (A) und (B) in Schliessstellung deckungsgleich verlaufen.

6. Vorrichtung nach einem der Ansprüche 2 bis 5, dadurch gekennzeichnet, dass der Zapfen (4f) zumindest zwei am Umfang verteilt angeordnete Federelemente (4a) aufweist, welche zum Halten der Etikette (12e) sowie zur Aufnahme von Masstoleranzen dienen.

7. Vorrichtung nach einem der Ansprüche 1 bis 6, dadurch gekennzeichnet, dass das erste Gehäuseteil (2) eine Auflagefläche (2b) für die Etikette (12e) aufweist.

8. Vorrichtung nach einem der Ansprüche 2 bis 7, dadurch gekennzeichnet, dass das Betätigungsteil (5) des zweiten Gehäuseteils (3) eine Haltevorrichtung (3b) zum Halten des scheibenförmigen Artikels (11) aufweist.

9. Vorrichtung nach einem der Ansprüche 2 bis 8, dadurch gekennzeichnet, dass die Gehäuseteile (2,3) auf der der Gemeinsamen Drehachse (C ) gegenüberliegenden Seite ein Verriegelungsmittel (7) mit Verriegelungsteilen (7a,7b) aufweisen, wobei ein Verriegelungsteil (7a,7b) insbesondere einen Hebel (7c) umfasst.

10. Verfahren zum Betrieb einer Vorrichtung nach einem der Ansprüche 1 bis 9, dadurch gekennzeichnet, dass eine Etikette (12e) in ein erstes Gehäuseteil (2) und ein scheibenförmiger Artikel (11), insbesondere eine Compact Disk (11a) in ein zweites Gehäuseteil (3) eingelegt wird, dass der scheibenförmige Artikel (11) und die Etikette (12e) durch ein Bewegen der Gehäuseteile (2,3) in eine übereinanderliegende, gegenseitig konzentrisch angeordnete Lage gebracht werden, und dass daraufhin der Artikel (11) und die Etikette (12e) in gegenseitige Berührung gebracht werden, um die Etikette (12e) aufzukleben.

## Claims

1. An apparatus (1) for the placement of a self-adhesive label (12e) onto a disk-shaped object (11) and especially for the concentric application of the self-adhesive label (12e) onto a compact disk (11a), comprising a first housing part (2) provided with a locating device (4) for the self-adhesive label (12e) as well as a second housing part (3) provided with a locating device (3b) for the disk-shaped object (11), whereby the two housing parts (2, 3) are movably connected with each other, particularly hingedly or translationally movable, and are conveyable from an open-position into a closed position such that, in said closed position, the two locating devices (3b, 4) are placed in an opposingly arranged position and that in said closed position at least one of said two locating devices (3b, 4) is movably arranged in the respective housing part (2, 3) to bring the disk-shaped object (11) into contact with the self-adhesive label (12e).

2. The apparatus according to claim 1, wherein said two housing parts (2, 3) are hingedly mounted to swivel about a common swivel axis (C).

3. The apparatus according to claims 1 or 2, wherein said locating device (4) for the self-adhesive label (12e) comprises a cylindrical spigot (4f) to hold the self-adhesive label (12e) in a concentric position relative to a first axis (A), and said locating device (3b) for the disk-shaped object (11) comprises a snap-on retainer to hold particularly the compact disk (11a) in a concentrically and perpendicularly extending position relative to a second axis (B).

4. The apparatus according to claim 3, wherein said cylindrical spigot (4f) is movably mounted in the linear direction of the first axis (A) as well as at right angles to said first axis (A), and wherein said cylindrical spigot (4f) is mounted prestressed directionally toward the second housing part (3).

5. The apparatus according to claims 3 or 4, wherein said cylindrical spigot (4f) comprises a centering recess (4g) extending concentrically to the first axis (A), said second housing part (3) includes an actuating device (5) with a cylinder-shaped centering plug (5c) extending concentrically to the second axis (B), and said cylinder-shaped centering plug (5c) and said centering recess (4g) are structured mutually adapted and intermeshing in such a manner that the first axis (A) and the second axis (B) congruently extend in said closed position of said two housing parts (2, 3).

6. The apparatus according to one of the claims 2 to 5, wherein said cylindrical spigot (4f) comprises at least two spring elements (4a) distributedly arranged at the circumference thereof, such spring elements (4a) serving to retain the self-adhesive label (12e) as well as to pick up dimensional tolerances.

7. The apparatus according to one of the claims 1 to 6, wherein said first housing part (2) comprises a supporting surface (2b) for the self-adhesive label (12e).

8. The apparatus according to one of the claims 2 to 7, wherein said actuating device (5) of the second housing part (3) includes said locating device (3b) to locate and hold the disk-shaped object (11).

9. The apparatus according to one of the claims 2 to 8, wherein said two housing parts (2, 3) comprise a locking device (7) with locking parts (7a, 7b) at the side oppositely remote from the common swivel axis (C), whereby one locking part (7a or 7b) particularly includes a lever (7c).

10. A method of operating an apparatus according to claim 1 and anyone of the claims 2 through 9, comprising the steps of:
(a) inserting a self-adhesive label (12e) into a first housing part (2);
(b) inserting a disk-shaped object (11a) into a second housing part (3);
(c) bringing the disk-shaped object (11) and the self-adhesive label (12e) by mutually dependent actuation of the two housing parts (2, 3) into a superimposed, mutually and concentrically arranged position; and
(d) bringing the disk-shaped object (11) and the self-adhesive label (12e) into mutual contact in order to affix the self-adhesive label (12e).

## Revendications

1. Dispositif (1) servant à appliquer une étiquette autoadhésive ou autocollante (12e) sur un objet en forme de disque (11), en particulier pour appliquer une étiquette autocollante de manière bien centrée sur un Compact Disc (11a), caractérisé par une première partie de boîtier (2) portant un dispositif d'arrêt (4) pour l'étiquette autocollante (12e) ainsi que par une seconde partie de boîtier (3) comprenant un dispositif d'arrêt (3b) pour l'objet en forme de disque (11), les deux parties de boîtier (2, 3) étant susceptibles de mouvement - en particulier de pivotement ou de translation - l'une par rapport à l'autre, reliées l'une à l'autre et susceptibles de passer d'une position ouverte à une position fermée de telle manière que, en position fermée, les deux dispositifs d'arrêt (3b, 4) soient positionnés l'un en face de l'autre et que, toujours en position fermée, au moins l'un des dispositifs d'arrêt (3b, 4) puisse se déplacer en direction du dispositif d'arrêt (3b, 4) opposé, à l'intérieur de la partie de boîtier (2, 3), afin de pouvoir mettre l'objet en forme de disque (11) en contact avec l'étiquette autocollante (12e).

2. Dispositif selon la revendication 1, caractérisé par le fait que les deux parties de boîtier (2, 3) peuvent pivoter autour d'un axe de rotation (C) commun.

3. Dispositif selon l'une des revendications 1 ou 2, caractérisé par le fait que le dispositif d'arrêt (4) destiné à l'étiquette autocollante (12e) présente un pivot (4f) de forme cylindrique servant à maintenir l'étiquette autocollante (12e) en position concentrique par rapport à un premier axe (A), et que le dispositif d'arrêt (3b) destiné à l'objet en forme de disque (11) présente un élément de rétention encliquetable servant à maintenir en particulier le Compact Disc (11a) en position concentrique et perpendiculaire par rapport à un second axe (B).

4. Dispositif selon la revendication 3, caractérisé par le fait que le pivot (4f) de forme cylindrique est retenu de manière permettant le mouvement tant dans le sens de déplacement du premier axe (A) que perpendiculairement à celui-ci, et que le pivot (4f) est retenu par précontrainte dans la direction vers la seconde partie de boîtier (3).

5. Dispositif selon l'une des revendications 3 ou 4, caractérisé par le fait que ledit pivot (4f) de forme cylindrique présente une rainure de centrage (4g) concentrique par rapport au premier axe (A), que ladite seconde partie de boîtier (3) comprend une pièce d'entraînement (5) pourvue d'un pivot de centrage cylindrique (5c) et concentrique par rapport au second axe (B), et que ledit pivot de centrage cylindrique (5c) et ladite rainure de centrage (4g) sont disposés l'un par rapport à l'autre et conformés de manière à pouvoir s'engrener de telle sorte que le premier axe (A) et le second axe (B) pointent dans la même direction en position dite de fermeture des deux parties de boîtier (2, 3).

6. Dispositif selon l'une quelconque des revendications 2 à 5, caractérisé par le fait que ledit pivot (4f) de forme cylindrique porte, répartis sur son périmètre, au moins deux éléments élastiques (4a) servant à retenir l'étiquette autocollante (12e) et à compenser les tolérances de mesure.

7. Dispositif selon l'une quelconque des revendications 1 à 6, caractérisé par le fait que ladite première partie de boîtier (2) présente une surface d'appui (2b) destinée à l'étiquette autocollante (12e).

8. Dispositif selon l'une quelconque des revendications 2 à 7, caractérisé par le fait que ladite pièce d'entraînement (5) de la seconde partie de boîtier (3) porte le dispositif d'arrêt (3b) servant à retenir l'objet en forme de disque (11).

9. Dispositif selon l'une quelconque des revendications 2 à 8, caractérisé par le fait que lesdites deux parties de boîtier (2, 3) portent sur le côté opposé à l'axe de rotation (C) commun un élément de verrouillage (7) portant des pièces de verrouillage (7a, 7b) dont l'une particulièrement comporte un levier (7c).

10. Procédé d'utilisation d'un dispositif selon la revendication 1 et selon l'une quelconque des revendications 2 à 9, comprenant les étapes suivantes:
(a) on introduit une étiquette autocollante (12e) dans une première partie de boîtier (2);
(b) on introduit un objet en forme de disque (11) dans une seconde partie de boîtier (3);
(c) on amène l'objet en forme de disque (11) et l'étiquette autocollante (12e) sous l'effet du mouvement interdépendant des deux parties de boîtier (2, 3) dans une position superposée et réciproquement centrée; et
(d) on met l'objet en forme de disque (11) et l'étiquette autocollante (12e) en contact mutuel en vue du collage de l'étiquette autoadhésive ou autocollante (12e).
